## Europäisches Patentamt

## European Patent Office

## Office européen des brevets

(11) Veröffentlichungsnummer: **0 378 738**
**A1**

# (12) EUROPÄISCHE PATENTANMELDUNG

(21) Anmeldenummer: **89104722.7**

(22) Anmeldetag: **16.03.89**

(51) Int. Cl.5: **B62D 55/14, B62D 55/08**

(30) Priorität: **20.01.89 DE 8900576 U**

(43) Veröffentlichungstag der Anmeldung:
**25.07.90 Patentblatt 90/30**

(84) Benannte Vertragsstaaten:
**CH DE ES FR GB IT LI NL SE**

(71) Anmelder: **ABG-WERKE GmbH**
**Kuhbrückenstrasse 18**
**D-3250 Hameln 1(DE)**

(72) Erfinder: **Bächle, Hans-Dieter**
**Heinefeldesweg 9**
**D-3251 Aerzen 1(DE)**

(74) Vertreter: **Sparing - Röhl - Henseler**
**Patentanwälte**
**Rethelstrasse 123 Postfach 14 02 68**
**D-4000 Düsseldorf 1(DE)**

(54) **Kettenlaufwerk für Kettenfahrzeuge.**

(57) Die Erfindung betrifft ein Kettenlaufwerk für Kettenfahrzeuge, insbesondere Straßenfertiger, mit einem Rahmen (1), der Laufrollen (5) trägt, die Kettenglieder (15) einer Kette führen. Damit die Laufrollen (5) leicht zu montieren sind, ist vorgesehen, daß die Laufrollen (5) jeweils in zwei Hälften (5', 5") längs einer Radialebene geteilt sind, die in einer Öffnung (2) im Rahmen (1) gelagert und durch eine Schraubverbindung (7, 8) miteinander verspannt sind, die sich durch eine Axialbohrung (6) der beiden Hälften (5', 5") erstreckt.

EP 0 378 738 A1

## Kettenlaufwerk für Kettenfahrzeuge

Die Erfindung betrifft ein Kettenlaufwerk für Kettenfahrzeuge, insbesondere Straßenfertiger, nach dem Oberbegriff des Anspruchs 1.

Es ist bei derartigen Kettenlaufwerken bekannt, die Laufrollen auf Achsen anzuordnen und über Lagerböcke am Laufrollen-Rahmen zu lagern, so daß sich eine relativ aufwendige und damit teure Konstruktion ergibt, die zudem Schweißarbeiten erfordert.

Aufgabe der Erfindung ist es, ein Kettenlaufwerk nach dem Oberbegriff des Anspruchs 1 zu schaffen, dessen Laufrollen durch konstruktionsmäßige Vereinfachung des Kettenlaufwerks leicht zu montieren und demontieren sind sowie vorzugsweise keinerlei Schweißarbeiten hierfür benötigen.

Diese Aufgabe wird entsprechend dem kennzeichnenden Teil des Anspruchs 1 gelöst.

Weitere Ausgestaltungen der Erfindung sind der nachfolgenden Beschreibung und den Unteransprüchen zu entnehmen.

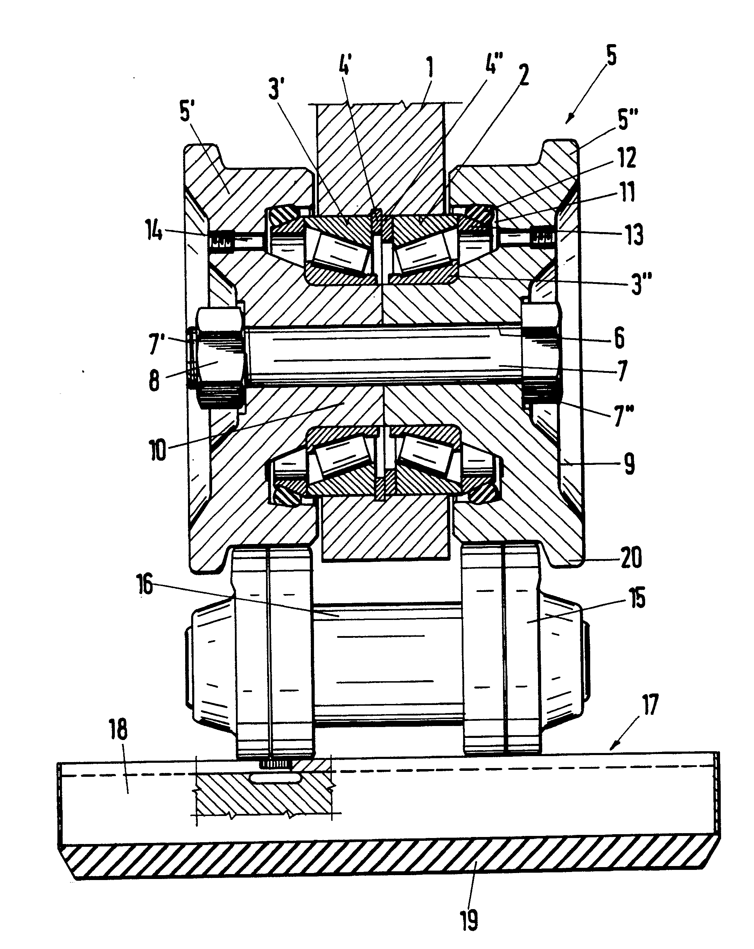

Die Erfindung wird nachstehend anhand eines in der beigefügten Abbildung im Schnitt dargestellten Ausführungsbeispiels näher erläutert.

Das dargestellte Kettenlaufwerk umfaßt eine Wange 1 aus Blech als Laufrollenträger, die mit Bohrungen 2 zur Aufnahme von jeweils zwei benachbarten Kegelrollenlagern $3'$, $3''$ versehen ist, wobei ein Kegelrollenlager $3'$ mittels eines im mittleren Bereich der Bohrung 2 in der Wange 1 gehaltenen Sicherungsrings $4'$ gegenüber der Wange 1 abgestützt ist, während das andere Kegelrollenlager $3''$ über einen sich am Sicherungsring $4'$ abstützenden weiteren Sicherungsring $4''$ gegenüber der Wange 1 abgestützt ist.

Jede Laufrolle 5 besteht aus zwei identischen Hälften $5'$, $5''$, die mit einer Axialbohrung 6 versehen sind, durch die sich ein Schraubbolzen 7 erstreckt, auf dessen Gewindeabschnitt $7'$ eine Mutter 8 ge schraubt ist, um die beiden Hälften $5'$, $5''$ einer Laufrolle 5 miteinander zu verspannen. Der Schraubbolzen 7 besitzt praktisch kein Spiel gegenüber der Axialbohrung 6, so daß er die beiden Hälften $5'$, $5''$ der Laufrolle 5 zentriert. Der Kopf $7''$ des Schraubbolzens 7 und die Mutter 8 sind gegenüber den Außenflächen der Laufrolle 5 versenkt angeordnet, indem die Hälften $5'$, $5''$ jeweils mit einer entsprechenden stirnseitigen Einsenkung 9 versehen sind.

In dem einander zugewandten Bereich der beiden Hälften $5'$, $5''$ jeder Laufrolle 5 sind diese mit Achsstummeln 10 versehen, die jeweils einen Innenlaufring des Kegelrollenlagers $3'$ bzw. $3''$ aufnehmen.

Benachbart zu dem Achsstummel 10 besitzt jede Hälfte $5'$, $5''$ eine ringförmige Ausnehmung 11, die eine Gleitringdichtung 12, 13 aufnimmt. Die Gegenlauffläche der Gleitringdichtung 12, 13 bildet jeweils der Außenring des Kegelrollenlagers $3'$ bzw. $3''$.

Jede Hälft $5'$, $5''$ ist mit einer verschließbaren Schmierbohrung 14 versehen, die in der ringförmigen, nach außen durch die Ringdichtung 12 abgedichteten Ausnehmung 11 mündet, so daß die Kegelrollenlager $3'$, $3''$ geschmiert werden können.

Das Kettenlaufwerk umfaßt ferner Kettenglieder 15, die über Kettenbolzen 16 miteinander verbunden sind und Kettenpolster 17 tragen. Letztere bestehen aus seitlich und nach unten offenen Blechschalen 18, die ein Gummipolster 19 aufnehmen und halten.

Zum Führen der Kettenglieder 15 besitzt jede Hälfte $5'$, $5''$ der Laufrollen 5 einen außenseitigen, umlaufenden Führungsflansch 20.

Die Konstruktion erfordert nur eine einfache Wange 1, in der die Bohrungen 2 anzubringen sind, wobei jeweils noch eine Nut für den Sicherungsring $4'$ einzudrehen ist. Dann können die beiden Hälften $5'$, $5''$ jeder Laufrolle 5 zusammen mit ihren Kegelrollenlagern $3'$ bzw. $3''$ und Dichtungen 12 eingesetzt und mittels des Schraubbolzens 7 miteinander verspannt werden. Als Hälften $5'$, $5''$ der Laufrollen 5 werden Schlagteile eingesetzt. Schweißarbeiten für den Laufrollenträger sind hierbei nicht erforderlich.

## Ansprüche

1. Kettenlaufwerk für Kettenfahrzeuge, insbesondere Straßenfertiger, mit einem Rahmen (1), der Laufrollen (5) trägt, die Kettenglieder (15) einer Kette führen, **dadurch gekennzeichnet,** daß die Laufrollen (5) jeweils in zwei Hälften ($5'$, $5''$) längs einer Radialebene geteilt sind, die in einer Öffnung (2) im Rahmen (1) gelagert und durch eine Schraubverbindung (7, 8) miteinander verspannt sind, die sich durch eine Axialbohrung (6) der beiden Hälften ($5'$, $5''$) erstreckt.

2. Kettenlaufwerk nach Anspruch 1, dadurch gekennzeichnet, daß die Schraubverbindung (7, 8) zentrierend ist.

3. Kettenlaufwerk nach Anspruch 1 oder 2, dadurch gekennzeichnet, daß die beiden Hälften ($5'$, $5''$) jeder Laufrolle (5) identisch sind.

4. Kettenlaufwerk nach einem der Ansprüche 1 bis 3, dadurch gekennzeichnet, daß der Rahmen (1) für jede Laufrolle (5) zwei benachbart zueinander angeordnete Wälzlager ($3'$, $3'$) aufnimmt, die jeweils eine Hälfte ($5'$, $5''$) der Laufrolle (5) lagern.

5. Kettenlaufwerk nach Anspruch 4, dadurch gekennzeichnet, daß die beiden Hälften (5', 5'') jeder Laufrolle (5) benachbart zum zugehörigen Wälzlager (3', 3'') eine ringförmige Ausnehmung (11) aufweisen, die einen sich am jeweiligen Wälzlager (3', 3'') abstützenden Stützring (13) aufnimmt, wobei zwischen dem Stützring (13) und einer Wandung der ringförmigen Ausnehmung (11) eine Gleitringdichtung (12) angeordnet ist.

6. Kettenlaufwerk nach Anspruch 5, dadurch gekennzeichnet, daß beide Hälften (5', 5'') jeder Laufrolle (5) eine in der ringförmigen Ausnehmung (11) mündende, verschließbare Schmierbohrung (14) aufweisen.

7. Kettenlaufwerk nach einem der Ansprüche 1 bis 6, dadurch gekennzeichnet, daß der Rahmen (1) aus einer Blechwange besteht.

8. Kettenlaufwerk nach einem der Ansprüche 4 bis 7, dadurch gekennzeichnet, daß die beiden Wälzlager (3', 3'') durch Sicherungsringe (4', 4'') im Rahmen (1) abgestützt und mit Abstand zueinander angeordnet sind.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-501575 (MARMON - HERRINGTON - COMPANY INC.) <br> * Seite 1, Zeile 65 - Seite 2, Zeile 27; Figur 1 * | 1 | B62D55/14 <br> B62D55/08 |
| A | | 2-4, 7 | |
| | --- | | |
| A | BE-A-424217 (MARMON - HERRINGTON - COMPANY INC.) <br> * Seite 2, Zeile 26 - Seite 2, Zeile 32; Figur 3 * | 1 | |
| | ----- | | |
| | | | **RECHERCHIERTE SACHGEBIETE (Int. Cl.5)** <br><br> B62D |

Der vorliegende Recherchenbericht wurde für alle Patentansprüche erstellt

| Recherchenort | Abschlußdatum der Recherche | Prüfer |
|---|---|---|
| DEN HAAG | 04 APRIL 1990 | CHLOSTA P. |

EPO FORM 1503 03.82 (P0403)